# EUROPEAN PATENT SPECIFICATION

(11) **EP 2 021 426 B1**
(45) Date of publication and mention of the grant of the patent: **12.08.2009**
(21) Application number: 07721827.9
(22) Date of filing: 24.05.2007
(51) Int. Cl.: C09J 7/02, B32B 7/12, B32B 27/36, B32B 29/06

(54) **MATERIAL FOR TECHNICAL, MOUNTING AND DECORATIVE PURPOSES**
MATERIAL FÜR TECHNISCHE, MONTAGE- UND DEKORATIONSZWECKE
MATÉRIAU POUR APPLICATIONS TECHNIQUES, DE MONTAGE ET DE DÉCORATION

(30) Priority: 25.05.2006 CZ 20060343
(43) Date of publication of application: 11.02.2009
(73) Proprietor: SAPAC-NOVUM s.r.o., 25209 Hradistko pod Mednikem (CZ)
(72) Inventor: GROENEWOUD, Benjamin, NL-2134 PP Hoofddorp (NL)
(74) Representative: Duskova, Hana
(86) International application number: PCT/CZ2007/000038
(87) International publication number: WO 2007/137526

(56) References cited:
- EP-A- 0 574 060
- EP-A- 1 225 208
- WO-A-01/56777
- US-A- 3 465 627
- US-A- 4 512 839
- US-A- 5 622 587
- US-A- 5 658 630
- US-B1- 6 740 379

## Description

### Technology Field

Submitted solution deals with structure of a new material for technical, mounting, decorative and labeling purposes based on both-sided adhesive thermoplastic materials, which may be processed by thermal cutting.

### Existing Conditions of Technology

Materials used for hot cutting are typically mill-finished or extruded vinyl materials even though other materials, such as polyethylene PE, polypropylene PP or others, may be used as well. At present, various decorative signs, pictures, etc., where such signs or pictures are created by hot cutting, are made of single-sided adhesive thermoplastic material, such as polyvinylchloride - PVC. This method has been developed in the USA in 1965 and introduced in Europe by company Fasson (Netherlands) in 1970.

Material itself, which is still being used so far, is formed by a support layer made of thermoplastic material, e.g. of PVC, equipped with pressure sensitive adhesive layer, or self-adhesive layer respectively, onto which a single-sided siliconated covering layer made of sulphate paper (kraft) is applied. Thermoplastic material may for instance be equipped with layer of printing ink according ti requirements for final effect. A sign or picture is created by cutting out from this support layer made of thermoplastic material.

Limitations of the above-mentioned material include processing of only a single-sided adhesive material, which means that after a sign or picture is cut out, it is in fact a final product, which can be used mainly for decorative or descriptive purposes in advertisement, etc.

### Principle of the Invention

The above-mentioned limitation of processing options for self-adhesive pressure sensitive materials is eliminated by structure of material according to the submitted solution. The material consists of a support layer from thermoplastic material, onto which the first self-adhesive pressure sensitive layer is applied, covered with bottom, single-sided siliconated covering layer made of sulphate paper (kraft). Subject matter of the new solution is that the support layer made of thermoplastic material is equipped with the second self-adhesive pressure sensitive layer covered with upper siliconated polyester covering layer, 20 to 40 microns thick, and resistant to high temperatures ranging from 180°C to 200°C. Both the first and the second pressure sensitive layers are layers of permanent or non-permanent glue on rubber or acrylic base.

Advantage of this solution is that it allows to process both-sided self-adhesive pressure sensitive materials by hot cutting because the second self-adhesive pressure sensitive layer is covered by upper siliconated polyester layer. Cut-out pattern may then be used as standard both-sided self-adhesive segment for mutual connection of two materials, construction elements or similar, in industry or for example for decorative purposes where the cut-out pattern may be additionally decorated with coloured sand, transfer foil, transfer peg or e.g. spangles, etc., which will stick to the glue.

This method of contact hot cutting of both-sided adhesive thermoplastic material is completely new and unknown worldwide in the sphere of self-adhesive materials processing. This method allows to process various thermoplastic materials, such as polyethylene foam, hard polyvinyls, ethylvinylacetate foam called EVA foam, polystyrene foils and foams or polypropylene foams and foils.

### Overview of Figures in Drawings

Submitted solution is schematically illustrated in attached drawing, which shows cross section of the material.

### Examples of the Invention Application

Material for decorative and labeling purposes is schematically illustrated in attached drawing. It consists of support layer 3 from thermoplastic material, for instance made of PVC, onto which the first self-adhesive pressure sensitive adhesive layer 2 is applied and covered by bottom single-sided siliconated covering layer 1 made of sulphate paper (kraft). Support layer 3 from thermoplastic material is then equipped with the second self-adhesive pressure sensitive layer 4 covered with upper siliconated polyester covering layer 5. Both the first and second self-adhesive pressure sensitive layers 2 and 4 are layers of permanent or non-permanent glue on acrylic or rubber base. For purely decorative purposes it is sufficient if the peel-off of the first and second self-adhesive pressure sensitive layers 2 and 4 measured on chromo paper is 16N/25 mm in contact time 0 minutes, 17N/25 mm in contact time 20 minutes and 21N/25 mm in contact time 24 hours. For use in industrial applications adhesive capacity depends on customer's specifications, adhesive capacity may be increased or decreased or e.g. non-permanent glue may be used for one or both self-adhesive layers.

Labels or patterns are cut out from both single- and double-sided adhesive thermoplastic material by means of thermal magnesium dies 6. These dies exploit combination of three parameters for melting the surface of pressure sensitive vinyls - pressure, rest time and warm-up. Thermal dies only touch the thermoplastic material, such as vinyl, and leave the underlying paper covering material intact.

Obviously, each production requires different combinations of warm-up, rest time and pressure for sharp cutting of various types of thermoplastic materials. Rough estimate is used in the beginning with lower temperatures, which are then gradually increased. For example, for PVC 100 microns thick the temperature should be set to 135°C and subsequently it should be gradually increased until a clean cut is achieved. Rest times vary according to used material and warm-up. Standard for the rest time is from half a second to two seconds. Based on experience, the rest time may be limited, thus increasing the production rate, by increasing the temperature.

The last parameter, pressure, is to a great extent affected by layout of the thermal die 6. Complex details require relatively more pressure than large open areas. It is also possible to change the type of the underlying material of the bottom plate of the cutting device depending on shape to be cut out. Typically, the underlying bottom plate is made of hard paper, plywood plate, polyurethane. When these three parameters, temperature, rest time and warm-up, will be under control, the make-up of melted material on the die's edges will be reduced and better results will be achieved.

Magnesium thermal dies 6 are typically manufactured in two thicknesses. Most commonly used thickness is from 4 to 7 mm. Heat transfer is better for the 7 mm dies due to their greater mass. As the etched magnesium thermal dies 6 are manufactured using photographic process, due care must be given to preparation of film negatives. Die manufacturers must transfer images onto the photosensitive magnesium by means of quality negative. It is necessary to bear in mind that the better the initial image quality, the higher quality of the final product and the customer's greater satisfaction. At present, the highest quality of negatives with sharp edges is achieved by computer electronic projection, which is capable of creating consistent edges of a thermal die 6.

The objective of using a thermal die 6 is to precisely cut out the model according to the customer's requirements. When aligning the model, it is crucial to consider that the heat produced by the thermal part of the die causes dilatation of all metals, magnesium included.

The cut-out angle for the thermoplastic material of support layer 3, for example for vinyl from 0.05 mm to 0.1 mm thick, will have the area of 0.05 mm to 0.1 mm depending on how clear the image is or whether a printed vinyl is used. Typical etching depth for basic cut out is between 1.5 mm and 1.9 mm. For special cut-out requirements deeper depths may be reached. It is vital to consider that only the first 0.25 mm to 0.5 mm will be actually cutting the given thermoplastic material. Remaining depth of the die helps prevent vulcanizing of the substrate, build-up of melted material, slowing down the cutting speed and keeping distance of the cut-out substrate from heated die.

For both-sided adhesive pressure sensitive material according to the submitted solution the procedure is identical as for thermoplastic materials covered only with the first self-adhesive pressure sensitive layer 2, however the substantial difference is in a sandwich structure of the product, see attached drawing. Here, the' second self-adhesive pressure sensitive layer 4 is applied and covered by upper single-sided siliconaded polyester covering layer 5 with thickness from 20 to 40 microns. As the material to be used for the upper covering layer 5 of the sandwich structure a 30 microns thick siliconated polyester may be recommended, which resists to high temperatures ranging from 180°C to 200°C used in hot-cutting process. Too thin or too thick layer of siliconated polyester may make the hot processing process difficult or even impossible. This upper covering layer 5 prevents the glue from sticking, protects the adhesive layer and simultaneously it functions as a removable layer at the moment of application because it has the siliconaed releasing layer from the side, which is in contact with the second self-adhesive pressure sensitive layer 4. Without this removable upper covering layer 5 it would not be possible to perform contact cutting from the thermoplastic material, i.e. support layer 3, equipped with glue from both sides, i.e. the first self-adhesive pressure sensitive layer 2 and the second self-adhesive pressure sensitive layer 4.

When a product with cut-out motif, either a sign or image, created as described, is to be used, at first the four layers are unstick from the bottom single-sided siliconated covering layer 1 made of sulphatepaper (kraft) where the required cut-out is created in the thermoplastic material of the support layer 3. Cut-out motif is stuck in required place by means of the first self-adhesive pressure sensitive layer 2. Subsequently, the upper single-sided siliconated polyester covering layer 5 is peeled off at once or gradually. This uncovers the second self-adhesive pressure sensitive layer 4 and, according to the intention, the surface material may be stuck on it now or the cut-out area may be decorated by application of coloured sand, transfer foil, beads, etc., as mentioned above.

### Industrial Applicability

Submitted solution is applicable in all cases where it is advantageous to use hot cutting to obtain a cut-out from both-sided self-adhesive pressure sensitive material. Such process, as opposed to standard cutting by blade, allows to cut even very tiny or rather complex patterns. Price of magnesium plate is considerably lower than price of engraved dies, which are used for cutting of tiny or complex patterns at present. Cut-out shapes from both-sided self-adhesive pressure sensitive materials will find application in industries where both-sided self-adhesive cut-outs are used so far - such as electrical engineering, automotive industry, footwear industry, etc., for attaching two materials to each other, or rather one onto the other, but also for decorative and advertisement purposes, such as application of labels or signs on various products, for production of decorative object, for example postcards, photo albums, stickers on gifts, etc., where the upper self-adhesive side may be decorated by materials such as coloured stand, spangles, transfer colour foils, transfer pegs, etc.

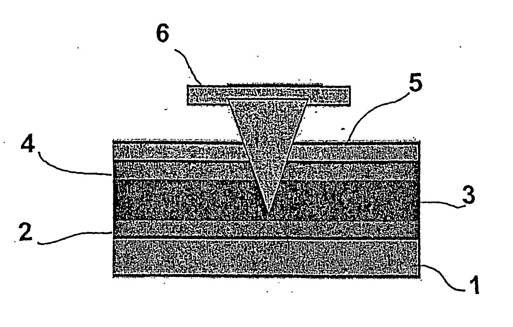

## Claims

1. Material for technical, mounting and decorative purposes formed by support layer (3) made of thermoplastic material, onto which the first self-adhesive pressure sensitive layer (2) is applied, covered by bottom single-sided siliconated covering layer (1) made of sulfate paper (kraft) **characterized by** the fact that the support layer (3) made of thermoplastic material is equipped with the second self-adhesive pressure sensitive layer (4), which is covered by upper siliconated polyester covering layer (5), with thickness from 20 to 40 microns, resistant to high temperatures ranging from 180°C to 200°C, while both the first and the second self-adhesive pressure sensitive layers (2) and (4) are layers of permanent or non-permanent glue on acrylic or rubber base.

## Patentansprüche

1. Material für technische, Montage- und Dekorationszwecken, der mit einer Trägerschicht (3) aus dem thermoplastischen Material gebildet ist, auf das die erste, selbstklebende, druckempfindliche, mit einer unteren, einseitig silikonierten Deckschicht (1) aus Sulfatpapier gedeckte Schicht (2) aufgetragen ist, **dadurch gekennzeichnet, dass** der Träger aus dem thermoplastischen Material (3) mit der zweiten, selbstklebenden, druckempfindlichen Schicht (4) versehen wird, die mit der oberen, silikonierten, im Bereich von 180°C bis 200°C wärmebeständigen Polyester-Deckschicht (5) mit einer Dicke von 20 bis 40 Mikron beschichtet ist, wobei die erste sowie die zweite selbstklebende, druckempfindliche Schicht (2) und (4) sind Schichten aus dem permanenten oder nicht permanenten Klebstoff auf Akryl- oder Gummibasis.

## Revendications

1. Matériau pour applications techniques, de montage et de décoration, constitué d'une couche du support (3) thermoplastique sur lequel est appliqué une première couche autocollante sensible à la pression (2) couverte par une couche inférieure du revêtement (1) siliconée unilatéralement et faite d'un papier de sulfate, dont la caractéristique essentielle est que le support thermoplastique (3) comporte une seconde couche autocollante sensible à la pression (4) celle-ci couverte par une couche supérieure de revêtement siliconée de polyester (5), de l'épaisseur de 20 à 40 microns et résistante aux températures élevées de l'ordre de 180°C à 200°C, étant donné que tant la première que la seconde couche autocollante sensible à la pression (2) et (4) sont constituées d'une colle permanente ou non permanente à base d'acrylate ou de caoutchouc.
